# EUROPEAN PATENT APPLICATION

(11) **EP 4 009 554 A1**
(43) Date of publication of application: **08.06.2022**
(21) Application number: 20210992.2
(22) Date of filing: 01.12.2020
(51) Int. Cl.: H04J 14/02, H04B 10/032

(54) **SYSTEM AND METHOD PROVIDING FAILURE PROTECTION BASED ON A FAULTY PORT IN AN AGGREGATION NETWORK BEING AN OPTICAL TRANSPORT NETWORK**

(71) Applicant: Deutsche Telekom AG, 53113 Bonn (DE)
(72) Inventor: WISSEL, Felix, 64372 Ober-Ramstadt (DE); WEIERSHAUSEN, Werner, 64859 Eppertshausen (DE)
(74) Representative: Blumbach · Zinngrebe Patentanwälte PartG mbB

(57) **Abstract**

The inventive solution suggests a system and a method of providing failure protection based on a faulty port in an aggregation network. A first optical network element (205), in particular a WDM-device, of a core node (200) includes a number of N first ports (210) and at least one second port (220). A second optical network element (105) of each of peripheral nodes (100) includes third ports (110), and at least one fourth port (120). Each of the third ports (120) is set to respectively match a wavelength of one of the first port (210) the first ports (210) and the thirds ports (110) are monitored concerning their respective port-behavior during transmitting optical signals, each of which having specific wavelength respectively assigned to one of the first ports. In case of detecting a faulty first port (210), one of the at least one second ports (220) is activated and the third port (110) which had matched the wavelength of the faulty port is set to match the wavelength of the activated second port. In case of detecting a faulty third port (110) of one of the second optical network elements, at this second optical network element it is switched from the faulty third port to one of the fourth ports (120) and this fourth port is set to match the wavelength formerly match by the faulty third port.

## Description

The present invention generally relates to the field of optical transport technology in a telecommunication network and in detail to a system and method providing failure protection based on a faulty port in an aggregation network being an optical transport network.

As it is known for a person skilled in the art, the hierarchical structure of a today's telecommunication network, in particular of a respective telecommunication network provider, is differentiated in access networks, in aggregation networks and in a core network. The access networks ensuring the connection of user end-terminals. A plurality of access networks is then connected to respective one aggregation network, in particular optical aggregation network, constructed for carrying more concentrated traffic, in particular for grouping data flow from and/or to peripheral nodes, and being connected to a core network which is the network of the highest hierarchical level and with the highest capacity within the telecommunication network and which provides connections with and access to other aggregation networks as well as to other core networks of further telecommunication networks.

The handover point between such an aggregation network, in particular optical aggregation network, and the core network is hereinafter referred to as core location or core node and each handover point between such an aggregation network and a plurality of access networks is hereinafter referred to as a peripheral location or peripheral node, sometimes even called as regional location or regional node. Accordingly, an aggregation network in case of being an optical transport network incorporates an optical fiber structure with several peripheral nodes aggregated thereto and with the optical fiber structure terminated at a handover point between the optical aggregation network and a core network. Each peripheral node incorporates an optical line termination (OLT) component to which respectively one access router (AR) is connected for one access network or even for more access networks, with optical line termination (OLT) component being connected at this peripheral node to the aggregation network grouping the data flow between these peripheral nodes and a core node. Usually, it is more likely that one access router (AR) serves in such a way several access networks instead of only one access network.

Furthermore, each core node incorporates components of the backbone network. In addition to components at the optical switching level (e.g. ROADMs - "Reconfigurable Optical Add-Drop-Multiplexers") and at the optical transport network (OTN) switching level (Cross Connects for interconnecting connection-oriented traffic), these are especially network elements of higher layers (Ethernet, IP). Furthermore, label switch routers (LSR) located at each core node that link the ARs connected to the peripheral nodes.

For the aggregation network being an optical transport network, optical fiber ring structures are often used as optical fiber structures to make the network resilient to failures. This resilience on the one hands side refers to fiber breaks and on the other hands side to the fact that the network components on higher network levels in the core nodes cannot be excluded. Therefore, the peripheral nodes are often connected twice to a core node. The complete infrastructure of an aggregation network can also be duplicated and separated into an A-network and a B-network, so that there are two operating sites, an A-core node and a B-core node, for each, in particular logical, core node.

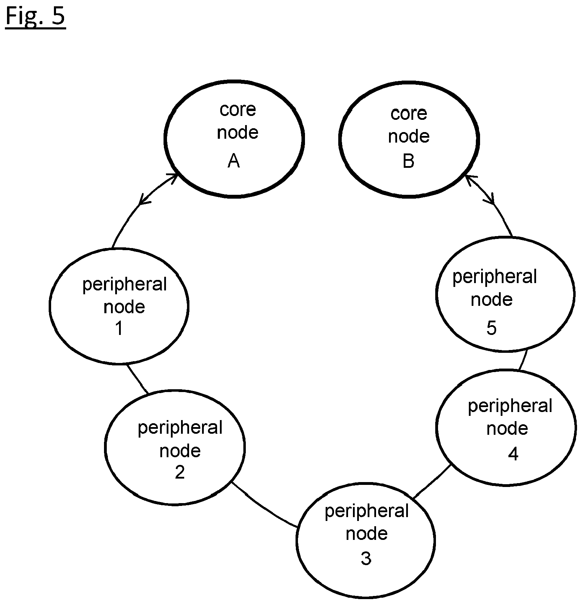

The peripheral nodes are aggregated on the optical fiber structure and reached from each core node via the corresponding optical transport fiber, with the respective OLT component of each peripheral node connected thereto. In case of two operating sites, the A-core node and the B-core node, the peripheral nodes sites are reached via an optical fiber ring from each of these core nodes and because of this semi-open structure, these aggregation rings are colloquially called "horseshoes". Such an aggregation network with a semi-open optical fiber is schematically depicted in fig. 5.

For carrying more concentrated traffic, i.e. for grouping the data flow between the peripheral nodes and a core node within the aggregation network, these optical transport networks are based on the so-called wavelength-division-multiplexing (WDM) technology and hence are able to ensure several data transmission channels in parallel and independently from each other on one optical transport fiber.

Each of these transmission channels is distinguished from each other by their respective frequency or wavelength, colloquially referred to as the "colors" of the respective channels. In principle, two ITU-T standards define the exact frequencies and distances from each other, i.e. in particular by using DWDM (dense WDM) or CWDM (coarse WDM). DWDM is addressing any transmission channel by a certain and unique frequency, wherein these frequencies in total are "denser" and much closer to each other than it is by CWDM using wavelengths for subdivision. A corresponding first standard is G.694 with G.694.1 "Spectral grids for WDM applications: DWDM frequency grid" and with G.694.2 "Spectral grids for WDM applications: CWDM wavelength grid". The corresponding second standard is G.709 "interfaces for the optical transport network" describing a means of communicating data over an optical network and defines a standardized method for transparent transport of services over optical wavelengths in DWDM systems.

Moreover, in G.694.1 center frequencies are defined, in particular at intervals of 100 GHz and 50 GHz. Although the data rates per wavelength have been increasing during the last years, methods have been developed which allow all commercially available data rates to fit into these frequency grids. In current optical transport networks using WDM technology, such as optical aggregation networks, for example up to 100 Gbit/s are transmitted over a distance of more than 1000 km through a WDM channel with a fixed width of 50 GHz in order to enable the best possible use of transport capacity of the optical fiber. The WDM channels themselves are defined and/or led either by fixed passive optical filter structures, so-called WDM multiplexers & demultiplexers ((demultiplexer)), or by variable active optical filters. In either case, optical filters are used in today's commercially available technology, which define clear or precise wavelength-dependent light paths through the network for the individual WDM channels.

Using WDM (de-)multiplexer or variable active optical filters, the feeding of payload or data signals into the optical fiber and out of the optical fiber can be done by different methods of increasing complexity, which, in their basic principles, are always based on the physical effect that different wavelengths are diffracted to different extents, i.e. each of the wavelengths changes from one optical medium to another at a different angle. This effect can be achieved, for example, by a prism or a so-called Arrayed Waveguide Grating (AWG) that uses the Bragg effect (i.e. the diffraction of light at a grating). There are purely passive components, but also structures that can be controlled by electrical activation, also called Wavelength-Selective Switches (WSS), since the wavelength is the decisive physical parameter here.

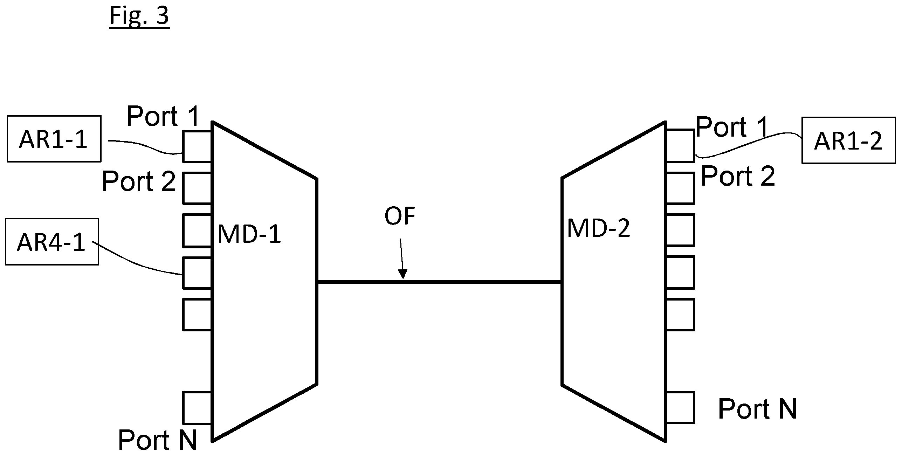

A schematic structure of two (de-)multiplexer MD-1, MD-2 interconnected by an optical transport fiber OF and ensuring several data transmission channels in parallel and independently from each other on this optical transport fiber OF is depicted in fig. 3 in its simplest versions. Each of the (de-)multiplexers MD-1, MD-2 has a number of N ports with a fixed assignment between the ports and the wavelengths, i.e. each port "Port 1", "Port 2", ..., "Port N" is fixed to a specific wavelength, and accordingly the ports of the right and of the left (de-)multiplexer are firmly connected by their respective wavelength, too. This means, a first port "Port 1" of the left (de-)multiplexer "MD-1" is linked as a function of its set wavelength to a first port "Port 1" of the right (de-)multiplexer MD-2, a second port "Port 2" of the left (de-)multiplexer "MD-1" is linked as a function of its set wavelength to a second port "Port 2" of the right (demultiplexer "MD-2", up to the last port "Port N" of the left (de-)multiplexer "MD-1" being linked as a function of its set wavelength to the last port "Port N" of the right (demultiplexer "MD-2".

The figure shows in part the connections to other electronic network elements, such as the ARs AR1-1, AR4-1, AR1-2, which provide the electrical payload signals to be fed into the optical fiber, i.e. multiplexed, and/or receives the electrical payload signals fed out from the optical fiber, i.e. demultiplexed.

It has to be mentioned, that the term "port" always is defining within this application terminology an interface component essentially having a transceiver assembly for sending an optical payload signal of the wavelength to which the port is assigned and/or for receiving an incoming optical payload signal of the wavelength to which the port is assigned. Thus at each end of an optical transport path, i.e. where incoming electrical payload signals have to be converted into optical signals having the correct wavelengths or incoming optical payload signals of the correct wavelengths have to be converted back into electrical payload signals as depicted for example in fig. 3, each port in reality is always incorporating a transmitter assembly for receiving an incoming electrical payload signal from one of the electrical elements connected thereto, converting it into the assigned wavelength and sending it via the optical fiber and/or a receiver assembly for receiving an incoming optical payload signal of the assigned wavelength, converting it back into an electrical payload signal and sending it to one of the electrical elements connected thereto.

Furthermore, for supporting a bidirectional transport of optical signals, the optical fiber OF drawn in between the two (de-)multiplexers MD-1 and MD-2 of fig. 3, is constructed as a double fiber in which optical signals are guided in both directions. Thus, in case of supporting a bidirectional transport of optical signals, at each end of an optical transport path, each port in reality is always incorporating a transmitter assembly and a receiver assembly.

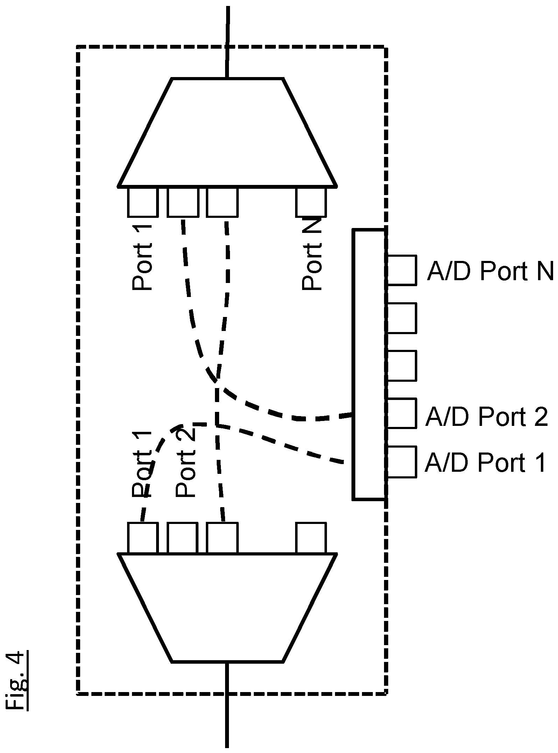

For many optical transport networks however, in particular for aggregation networks, it is not intended, to feed all wavelengths between the same - static - endpoints, e.g. at each above described peripheral node, into and out of the optical transport fiber, the OLT components of the peripheral nodes usually incorporate an extension in the form of a Fixed Optical Add-Drop-Multiplexer (FOADM), schematically depicted in fig. 4, consisting of a suitable arrangement of prisms, AWGs or WSSs that feeds only selected wavelengths out of the optical transport fiber (i.e. multiplex-fiber) to Add/Drop ports, in fig. 4 depicted as "A/D Port 1" to "A/D Port N" and refeeds other selected wavelengths back into the optical transport fiber. Thus, FOADMs are typically used in the above described ring structures of aggregation networks and the selected directions and wavelengths are statically determined by the selection of the Add/Drop ports.

For the sake of completeness, even so called Reconfigurable Optical Add-Drop-Multiplexers (ROADMs) exist, which work and are structured similar to a FOADM, but allow a flexible assignment and control of respective Add/Drop ports. ROADMs are furthermore distinguished into different sub-variants, depending on the degree of freedom they allow. Typically, ROADMs have more than two outgoing fibers in addition to the add/drop ports into which signals can be coupled or decoupled (these are the so-called "Degrees" or the degree of ROADMs). With some ROADMs you can choose the direction freely, with others the assignment of wavelengths to ports. Instead of using individual AWGs or WSSs, ROADMs work internally with combinations and series of these components to achieve full flexibility. For this reason, ROADMs are more expensive than the simpler network elements and are preferably used in the core or backbone networks of a telecommunication network provider.

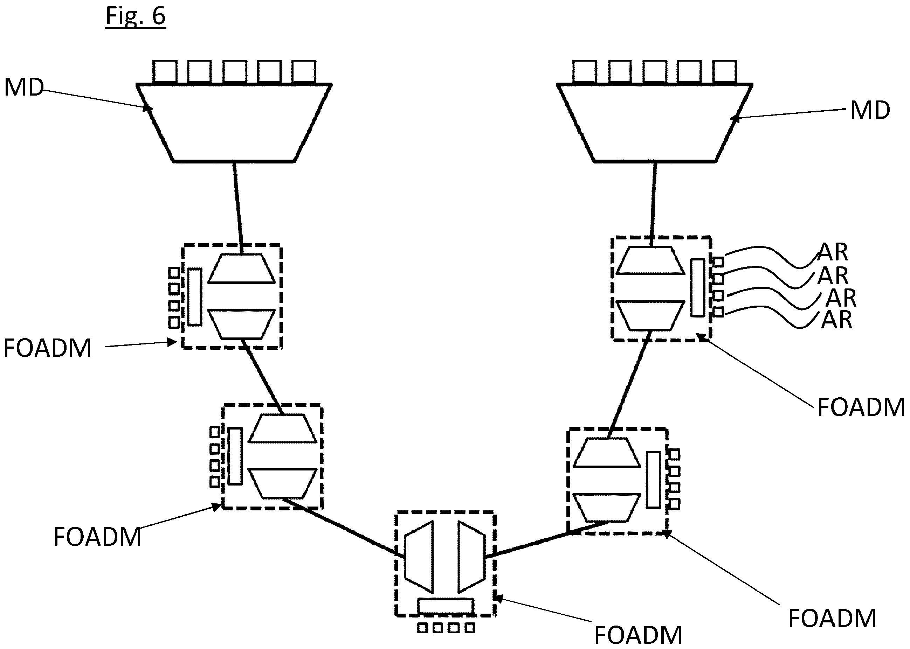

Bearing the above specification in mind, fig. 6 shows a generic view of selected details of the optical infrastructure of an aggregation network according to fig. 5. Usually, there is no free choice of path at the core node and simple (de-)multiplexers "MD" are used to feed the wavelengths into and out of the optical fiber. As mentioned above, FOADMs are usually used at the peripheral nodes, because not all wavelengths are to be terminated at the same node, with preferably each of the add/drop ports being connected with a respective access router providing the electrical payload signals to be fed into the optical fiber and/or receiving the electrical payload signals fed out from the optical fiber for enabling the data handover between the aggregation network and the access networks connected thereto. Currently, numerous channel WDM systems, for example 40-channel DWDM systems are used, with such an aggregation network and with numerous peripheral nodes aggregated on the optical fiber structure. Based for example, on a 40-channel DWDM system with 5 peripheral nodes aggregated, one can assume that each peripheral node might have approximately 8 wavelengths available. Of course, the concrete allocation depends on the traffic requirements and detailed planning specifications.

Regarding port protection, i.e. in particular failure protection based on a faulty port, in optical transport networks, in particular in aggregation networks, failures of individual ports are the most common cause of faults in optical transport networks, in addition to failures of the fiber itself (e.g. cable breaks). In order to secure the network against these failures of individual ports, mechanisms have been developed in the past.

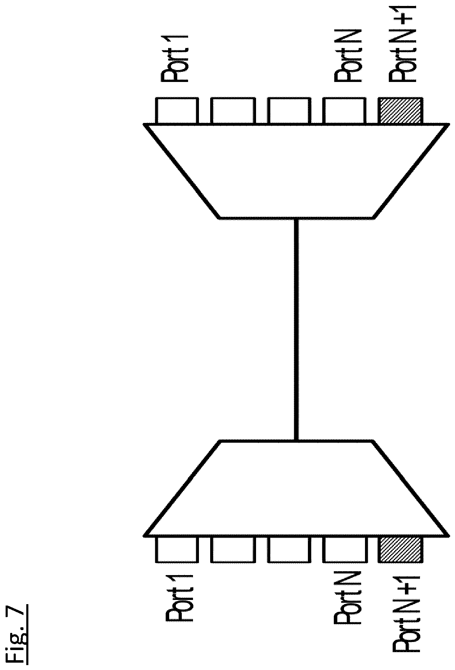

Based on the assumption, that only a single failure of an individual port exists and not e.g. the fiber is affected, too, for compensating such a failure of any port on an optical network element, a replacement port may be installed in addition, which does not carry any traffic load during normal operation but can replace any of the other N ports in use. This usually is called "N+1 port protection". With regard to a point-to-point connecting between two (de-)multiplexers, such replacement ports "Port N+1", i.e. for each (de-)multiplexer one additional port "Port N+1", are marked in the appended fig. 7 by hatching. Thus, each of these replacement ports and its respective assigned wavelength is not used during normal operation but is only put into operation if one of the other ports 1 to N fails.

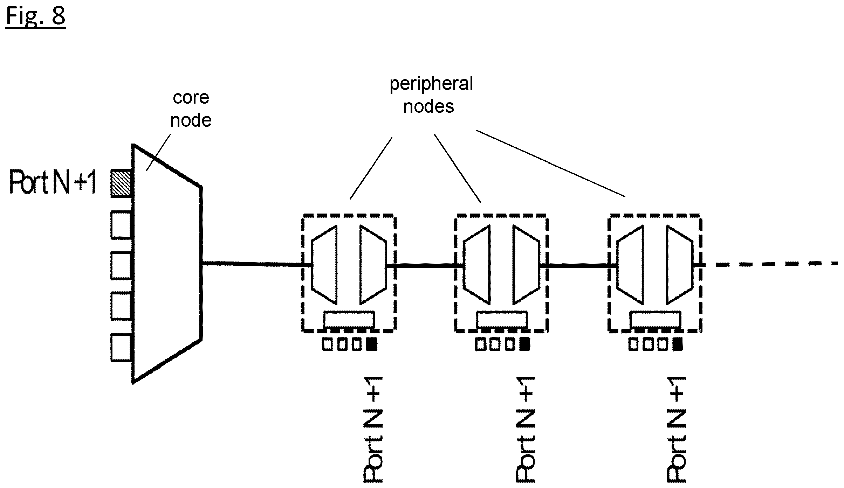

For a pure point-to-point connection, this approach usually is sufficient. However, in complex optical transport networks, such as aggregation networks, this point-to-point connection is not given according to the afore description. Here several access routers at different peripheral nodes, i.e. with each access router usually connected with respective one port thereof, are supplied over the link of the LSR located at the core node. To implement port protection as well, there are three alternatives known according to the state of the art:
As a first alternative, a single additional replacement port with reserved wavelength is provided at the core node and at all peripheral nodes. In the event of a detected port failure, it is then necessary for a technician at the peripheral node affected by the malfunction to configure the FOADM so that the correct color is coupled in and out. This usually applies bi-directionally, regardless of whether the port of a (de-)multiplexer assigned to the LSR or of a FOADM assigned to an AR fails, because in both cases the systems have to be switched from the original pair to the spare port pair and it is not possible to know in advance of the failure which traffic relation to which AR will be affected. This alternative is visualized in fig. 8, in which, for better readability, not an entire optical fiber ring structure based on fig. 6 is shown, but instead, the optical fiber structure is "cut open" and "folded over". To the left side only the (de-)multiplexer of one core node and to the right are only three peripheral locations with the FOADMs are shown. The hatched replacement port Port N+1 of the (de-)multiplexer has the same wavelength as all the replacement ports Port N+1 marked in black on the FOADMs.

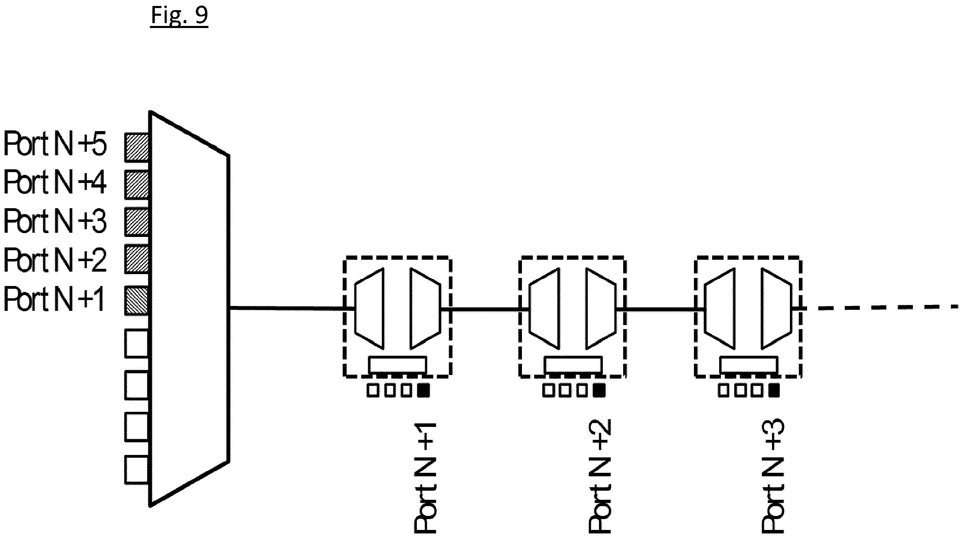

A further alternative is, to have a respective separate replacement port in its reserved color for each of the traffic relations. In this case, no technician is required in the event of a fault, but more than just a single replacement port must be kept available at each core node, namely, respectively one separate replacement port in a reserved color for each peripheral node. Thus, based on a structure sketched in fig. 6, five separate replacement port Port N+1, Port N+2, Port N+3, Port N+4, Port N+5 at each core node. This is shown in fig. 9, although only 3 peripheral nodes are shown. This means, that a separate additional port must be provided at each peripheral node and for each peripheral node one at each core node, because similar to the first alternative, it is not known in advance which node and which direction will be affected, i.e. where the port error will occur. Thus, this solution is expensive and blocks resources in the fiber optic spectrum.

The third alternative would be to install ROADMs at all peripheral nodes, with which the wavelengths are freely assignable as described above. As the use of ROADMs however, is relatively expensive, it is only worthwhile in a network with a higher degree of meshing and hence, may be used in the core or backbone network, but is not useful in the aggregation network, because there are usually only two free directions within the optical fiber structure, such as shown in fig. 6 for example.

An object of the invention is therefore, to provide a new, less intensive and easy solution of failure protection concerning a faulty port in an optical transport network, in particular in an aggregation network, avoiding the aforementioned problems.

The inventive solution is defined by a system and a method according to the appended set of claims, whereby preferred embodiments are the subject matter of the respective dependent claims.

Summarizing, the inventive solution proposes a system and method for simplifying failure protection in optical transport networks, in particular in aggregation networks, expediently by using instead of FOADMs at the peripheral nodes simple splitters/couplers, which are up to now only typical for so-called "filter-less optical networks" (FONs).

In more detail, the invention proposes a method and a system of providing failure protection based on a faulty port in an aggregation network, wherein the aggregation network incorporates an optical fiber structure with several peripheral nodes aggregated thereto, each of which providing a handover point to a plurality of access networks, and with the optical fiber structure terminated at a core node providing a handover point to a core network, and wherein the aggregation network is adapted for transmitting optical signals based on wavelength-division-multiplexing within a number of N transmission channels, each of which being differentiated by a different wavelength, in parallel and independently from each other.

The inventive method on the one hand side is characterized by providing the core node with a first optical network element, with the first optical network element preferably being or least incorporating a WDM-device, including a number of N first ports and at least one second port, each of the first and second ports has a fixed assignment to a specific and unique wavelength and is adapted for converting incoming electrical payload signals into optical signals having that specific wavelength but with the second ports being not activated therefore, and by providing each of the peripheral nodes with a second optical network element and providing each of the second optical network elements with third ports, wherein the sum of third ports is maximal N. Each of the peripheral nodes is furthermore provided with at least one fourth port, with each of the third and fourth ports being able to be set to a specific wavelength and is adapted for converting incoming optical payload signals of that specific wavelengths back into electrical payload signals and with each third port is set to respectively match a wavelength of one of the first port. The first ports and the thirds ports are monitored concerning their respective port-behavior during transmitting optical signals, each of which having specific wavelength respectively assigned to one of the first ports.
In case of detecting a faulty first port, one of the at least one second ports is activated and the third port which had matched the wavelength of the faulty port is set to match the wavelength of the activated second port.
In case of detecting a faulty third port of one of the second devices, at this second device it is switched from the faulty third port to one of the fourth ports and this fourth port is set to match the wavelength formerly match by the faulty third port.

In a similar way, the inventive system on the other hand side is characterized by a first optical network element of the core node, with the first optical network element preferably being or least incorporating a WDM-device, and with the first optical network element including a number of N first ports and at least one second port, each of the first and second ports has a fixed assignment to a specific and unique wavelength and is adapted for converting incoming electrical payload signals into optical signals having that specific wavelength, but with the second ports being not activated therefore, and/or and is adapted for converting incoming optical payload signals of that specific wavelengths back into electrical payload signals. The system is furthermore characterized by a second optical network element of each of the peripheral nodes, with each of the second optical network elements including third ports, wherein the sum of third ports is maximal N, and at least one fourth port, with each of the third and fourth ports being able to be set to a specific wavelength and is adapted for converting incoming optical payload signals of that specific wavelengths back into electrical payload signals and/or is adapted for converting incoming electrical payload signals into optical signals having that specific wavelength and wherein each of the third ports is set to respectively match a wavelength of one of the first port.*
The system is furthermore comprising a monitoring device adapted for monitoring the first ports and the thirds ports concerning their respective port-behavior during transmitting optical signals, each of which having specific wavelength respectively assigned to one of the first ports.
The system furthermore comprises a failure protection device, with the failure protection device adapted:
in case of detecting a faulty first port by the monitoring device, for activation one of the at least one second ports and for setting the third port which had matched the wavelength of the faulty port to match the wavelength of the activated second port; and
in case of detecting a faulty third port of one of the second devices by the monitoring device, for switching at this second device from the faulty third port to one of the fourth ports and for setting this fourth port to match the wavelength formerly match by the faulty third port.

Accordingly, as some advantages can be listed, that:
- it is possible in the event of a port failure, to switch to the replacement port without the need for any technician;
- unlike before, it is sufficient to provide only this one reserved wavelength in the spectrum for the case of failure. All other parts of the spectrum are available for regular services; and
- the resilience of the network is increased because the second replacement port is still available at the unaffected remote location/node.

Further features and advantages become obvious by the subsequent description of the invention with regard to some exemplary preferred embodiments, thereby taken into account the afore-described common knowledge, technological background and state of the art and by referencing to the attached drawings. In the drawings:
- fig. 1: sketches a useful embodiment of the inventive system, in particular providing an inventive N+1 port failure protection arrangement using at the peripheral nodes FON components, such as splitters/couplers,
- fig. 2: sketches an useful embodiment of the inventive method, in particular which can be performed by the system according to fig. 1,
- fig. 3: sketches a schematic representation of a (de-)multiplexer,
- fig. 4: sketches a schematic representation of a FOADM,
- fig. 5: sketches in general a horseshoe-like aggregation network,
- fig. 6: sketches a structure of an optical transport network along a fiber-ring,
- fig. 7: sketches an N+1 port failure protection arrangement based on a point-to-point connection providing N wavelengths according to the state of the art,
- fig. 8: sketches an N+1 port failure protection arrangement in an horseshoe-like aggregation network according to the state of the art, and
- fig. 9: sketches an alternative N+1 port failure protection arrangement in a horseshoe-like aggregation network according to the state of the art.

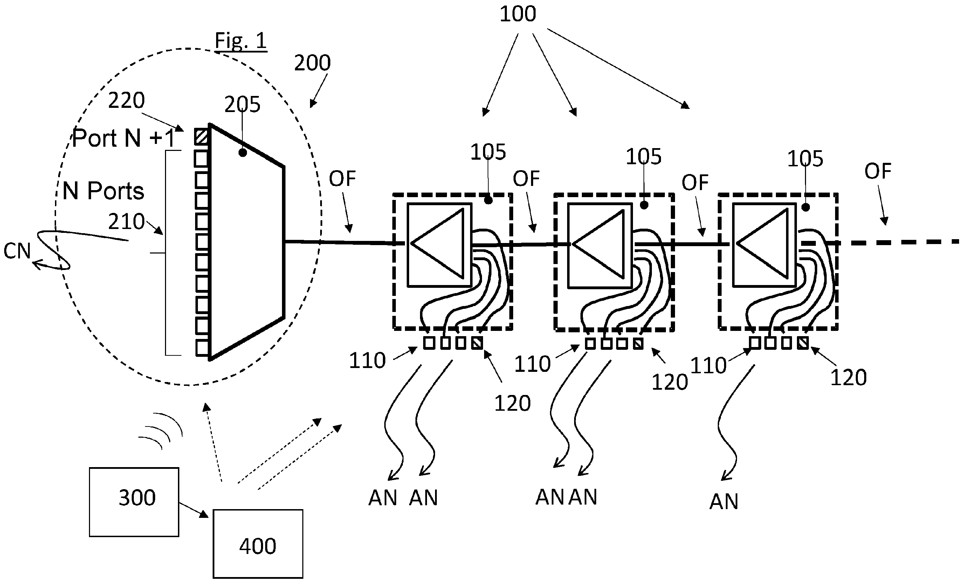

For describing in more detail some exemplary preferred embodiments of the invention, fig. 1 sketches a useful embodiment of the inventive system, in particular providing an inventive N+1 port failure protection arrangement using at the peripheral nodes FON components, preferably splitter/coupler devices.

The system as depicted in fig. 1 includes an aggregation network incorporating an optical fiber structure, i.e. a structure based on the use of optical fibers OF, and it is assumed, that the aggregation network is adapted for transmitting optical signals based on wavelength-division-multiplexing (WDM) within a number of N transmission channels, each of which being differentiated by a different wavelength, in parallel and independently from each other.
In this regard, the depicted optical fiber OF structure of this aggregation network is terminated at a core node 200 providing a handover point to a core network CN and several peripheral nodes 100 being aggregated to the optical fiber structure, with each of the peripheral nodes 100 providing a handover point to a plurality of access networks AN

For providing a failure protection based on a faulty port, in particular in a less intensive and easy way, the core node 200 incorporates a first optical network element 205, preferably being or least incorporating a WDM-device, with first optical network element 205 including a number of N first ports 210 and at least one second port 220. In fig. 1, ten first ports 210 are depicted, hence N is ten, and one second port 220 is depicted. Based on the afore described technological background, it is assumed, that each first port 210 and each second port 220 has a fixed assignment to a specific and unique wavelength and is adapted for converting incoming optical payload signals of that specific wavelength back into electrical payload signals and/or is adapted for converting incoming electrical payload signals into optical signals having that specific wavelength. Each second port 220 however, is at first not activated for converting incoming electrical payload signals into optical signals having that specific wavelength. Furthermore, each of the peripheral nodes 100 incorporates a second optical network element 105including third ports 110, with the sum of third ports however is maximal N, i.e. all second optical network elements include together a maximal number of N third ports 110. Each second optical network element 105 is additionally including at least one fourth port 120. In fig. 1, respectively one fourth port 120 and three third ports 110 are depicted. It has to be mentioned however, that each second optical network element may have a different number of third ports 110 and/or fourth ports 120 with regard to each other, the sum of third ports however is maximal the number of N, i.e. of the first ports 210.
Each of the third ports 110 and of the fourth ports 120 being able to be set to a specific wavelength and is adapted for converting incoming optical payload signals of that specific wavelength back into electrical payload signals and/or is adapted for converting incoming electrical payload signals into optical signals having that specific wavelength. Moreover, it is assumed that each of the third ports 110 is set to respectively match a wavelength of one of the first port 210.

The system is furthermore comprising a monitoring device 300 for monitoring the first ports 210 and the thirds ports 110 concerning their respective port-behavior during transmitting optical signals, with each of optical signals having a specific wavelength respectively assigned to one of the first ports, and is comprising a failure protection device 400.

According to the invention, the failure protection device 400 is adapted in case of detecting a faulty first port 210 by the monitoring device 300, for the activation of one of the at least one second ports 220 and for setting the third port 110 which had matched the wavelength of the faulty port to match the wavelength of the activated second port.

According to the invention, the failure protection device 400 is adapted furthermore in case of detecting a faulty third port 110 of one of the second optical network elements 105 by the monitoring device 300, for switching at this second optical network element from the faulty third port to one of the fourth ports 120 at this second device and for setting this fourth port to match the wavelength formerly match by the faulty third port.

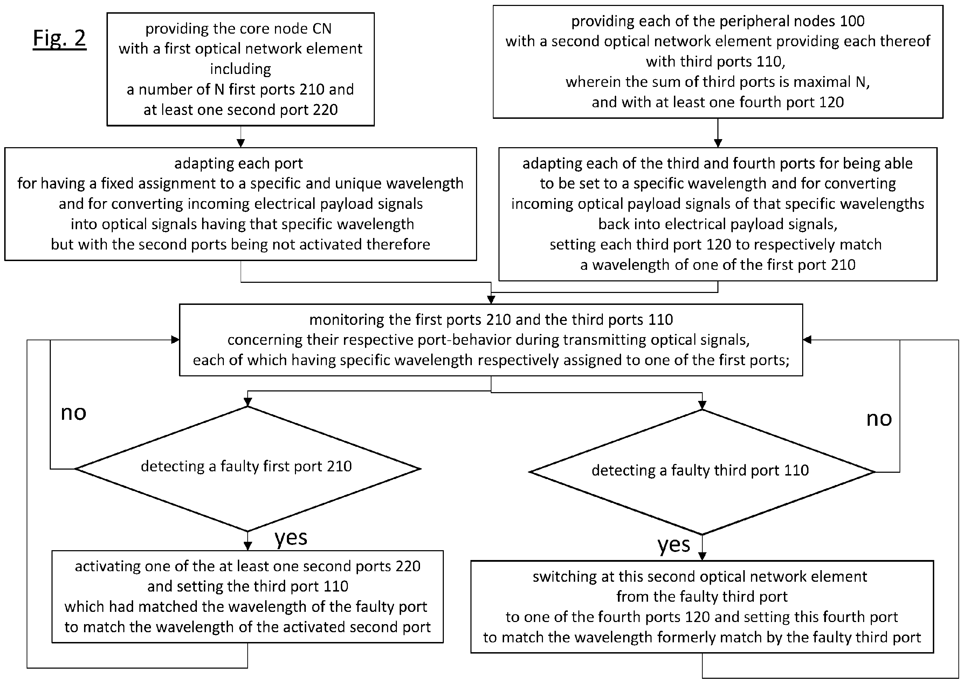

Thus, at least with a before described inventive system having the first ports 210 and the second ports 220 adapted for converting incoming electrical payload signals into optical signals and having each of the third ports 110 and of the fourth ports 120 adapted for converting incoming optical payload signals of that specific wavelengths back into electrical payload signals, a first useful embodiment of the inventive method, as sketched in fig. 2 by a simple flow chart, already can be implemented in practice in a very easy way. This means, by setting each of the third ports 120 to respectively match a wavelength of one of the first port 210 and by monitoring the first ports 210 and the thirds ports 110 concerning their respective port-behavior during transmitting optical signals and with each of these optical signals having specific wavelength respectively assigned to one of the first ports,
either one of the at least one second ports 220 can be activated in case of detecting a faulty first port 210 and the third port 110 which had matched the wavelength of the faulty port can be set to match the wavelength of the activated second port, and/or
- in case of detecting a faulty third port 110 of one of the second optical network elements 105, at this second optical network element it can be set from the faulty third port to one of the fourth ports 120 and this fourth port can be set to match the wavelength formerly matched by the faulty third port.

Furthermore, as an alternative or in addition, by having the first ports 210 and the second ports 220 adapted for converting incoming optical payload signals of that specific wavelength back into electrical payload signals and having each of the third ports 110 and of the fourth ports 120 adapted for converting incoming electrical payload signals into optical signals having that specific wavelength, a respective further useful embodiment of the inventive method, already can be implemented in practice in a very easy and similar way.

Thus, by again setting each of the third ports 120 to respectively match a wavelength of one of the first port 210 and by monitoring the first ports 210 and the thirds ports 110 concerning their respective port-behavior during transmitting optical signals and with each of these optical signals having specific wavelength respectively assigned to one of the first ports,
either one of the at least one second ports 220 can be activated in case of detecting a faulty first port 210 and the third port 110 which had matched the wavelength of the faulty port can be set to match the wavelength of the activated second port, and/or
- in case of detecting a faulty third port 110 of one of the second optical network elements 105, at this second optical network element it can be set from the faulty third port to one of the fourth ports 120 and this fourth port can be set to match the wavelength formerly match by the faulty third port.

Thus, according to a preferred embodiment of the inventive system, the optical fiber OF structure is constructed not only for being able for a uni-directional transmission of optical signals but furthermore for enabling a bi-directional transmission of optical signals.

Moreover, in a highly functional and preferred embodiment, the optical fiber OF structure is duplicated and the core node 200 is split into two partial core-nodes, with the duplicated optical fiber structure there between and terminated at each of the two partial core nodes. Consequently, each of the peripheral nodes 100 is then aggregated on the duplicated optical fiber structure and reached from each of the partial core nodes.

Thus, with such an embodiment, i.e. having two operating sites with each of it having a respective partial core node, even a semi-open structure like the above described "horseshoes" can be realized together with the invention. In this regard and based thereon, fig. 1 then is not depicting the entire optical fiber ring structure but rather, like fig. 6, a "cut open" and "folded over" optical fiber structure. Accordingly, to the left side of fig. 1 then only the first optical network element 205, i.e. in particular a WDM-device, of one core node is shown and to the right are only three peripheral locations with the second optical network elements 105 are shown.

According to a very preferred embodiment, each of the second optical network elements 105 is or at least incorporates a coupler/splitter device. As can be seen from fig. 1, such embodiment is depicted thereby.

Thus, at least the FOADMs at the peripheral nodes 100 are replaced in contrast to the above state of the art by simple splitters/couplers, which are typical up to now rather for so-called "filter-less optical networks"

As known, filter-less optical networks (FONs) waive optical filters to control WDM channels through the network and instead allow any wavelength to propagate through the entire connected network. So-called "coherent" receivers that can receive the complete WDM-spectrum are set to the correct wavelength by a local optical oscillator and can then filter out the wavelength assigned to them from all incoming optical signals and/or the other way around with regard to "coherent transmitters". Thus, filter-less networks in principle offer several advantages, such as the relatively inexpensive use of splitter/coupler solutions instead of more complex optical network elements and the unnecessity of using transceivers whose wavelength matches the assigned slot, that reduce the planning effort and simplify network management. On the other hand, wavelengths that are used somewhere on the route segment must not be reused and it is not yet clear which range limitations have to be considered due to the high noise load from the other channels (crosstalk). Another aspect is that FONs usually must not form loops at the fiber level, because this can lead to self-amplifying laser effects.

Concerning the invention however, by using simple splitters/couplers devices with each of the second optical network elements 105 at the peripheral nodes 100 instead of FOADMs, such an embodiment of inventive structure is not representing a filter-less network, because filters preferably are still used at the core node(s) 200.

This means, the first optical network element 205 preferably being or at least incorporating a WDM-device, in particular at least one multiplexer/demultiplexer device, i.e. in particular a so-called WDM multiplexer & demultiplexer ((demultiplexer)) having a fixed passive optical filter structure. As can be seen from fig. 1, such embodiment is depicted thereby.

It would be conceivable to use only splitters/couplers at core sites as well, which means, that first optical network element 205 preferably is or at least incorporates at least one coupler/splitter device. This however, would usually require intervention in the operating site architecture and would not result to further significant improvement of the network as a whole.

Taken into account the afore described embodiments of the invention and summarizing the above, as a very most preferred embodiment of the invention, a combination of OADMs and FON components for providing a more easier "N+1 port failure protection" is used.

Thus, this means, two forms of optical transmission technology are combined in a very improved and enhancing way. At the core site, i.e. in particular at the core node, to which several peripheral sites, i.e. in particular by means of the peripheral nodes, are logically and physically connected, a (de-)multiplexer is still used to feed the data into the fiber optic cable. However, the regional sites are connected to the fiber via splitters/couplers and use "coherent receivers" like a FON approach to receive the wavelength assigned to them. At each location (core location or peripheral location, i.e. at each first optical network element 200, in particular for all LSR involved therewith, as at each second optical network element 100, in particular for all AR involved therewith) a single additional replacement port 220 or 120 is installed, as depicted in fig. 1.

If any of the ports 210 at the first optical network element 200, i.e. in particular at the incorporated (de-)multiplexer fails, the replacement port 220 can take over directly and only the corresponding port 110 at the affected peripheral location has to be switched to the new wavelength. Both can be done by use of a monitoring device and failure protection device, for example on a network administrator site and/or with a configuration command from the Network Operation Center. In this case, the additional port 120 at the peripheral location can even continue to offer N+1 protection and can be used as a replacement in case of a local error.

If a port 110 at a peripheral location fails, the replacement port 120 at this regional location can take over directly. This means that the replacement port at this peripheral location is switched on with the correct wavelength assignment, also by use of a monitoring device and failure protection device, for example on access of the network administrator site and/or with a configuration command from the Network Operation Center. In this case, the additional port 220 at the core node can be kept available for a second failure.

In other words, the inventive is thus suggesting for providing failure protection based on a faulty port in an aggregation network in general, that a first optical network element 205, in particular a WDM-device 205, of a core node 200 includes a number of N first ports 210 and at least one second port 220 and a second optical network element 105 of each of peripheral nodes 100 includes third ports 110 and at least one fourth port 120. Each of the third ports 120 is set to respectively match a wavelength of one of the first port 210 the first ports 210 and the thirds ports 110 are monitored concerning their respective port-behavior during transmitting optical signals, each of which having specific wavelength respectively assigned to one of the first ports. In case of detecting a faulty first port 210, one of the at least one second ports 220 is activated and the third port 110 which had matched the wavelength of the faulty port is set to match the wavelength of the activated second port. In case of detecting a faulty third port 110 of one of the second devices, at this second device it is switched from the faulty third port to one of the fourth ports 120 and this fourth port is set to match the wavelength formerly match by the faulty third port.

Accordingly, it is possible in the event of a port failure, to switch to the replacement port without the need for any technician; unlike before, it is sufficient to provide only this one reserved wavelength in the spectrum for the case of failure with all other parts of the spectrum are available for regular services; and the resilience of the network is increased because the second replacement port is still available at the unaffected remote location/node.

## Claims

1. Method of providing failure protection based on a faulty port in an aggregation network, wherein the aggregation network incorporates an optical fiber structure with several peripheral nodes (100) aggregated thereto, each of which providing a handover point to a plurality of access networks (AN), and with the optical fiber (OF) structure terminated at a core node (200) providing a handover point to a core network (CN), and wherein the aggregation network is adapted for transmitting optical signals based on wavelength-division-multiplexing (WDM) within a number of N transmission channels, each of which being differentiated by a different wavelength, in parallel and independently from each other,
- the method comprising the steps of
- providing the core node (200) with a first optical network element including a number of N first ports (210) and at least one second port (220), each of the first and second ports has a fixed assignment to a specific and unique wavelength and is adapted for converting incoming electrical payload signals into optical signals having that specific wavelength but with the second ports being not activated therefore;
- providing each of the peripheral nodes (100) with a second optical network element (105) and providing each of the second optical network elements with third ports (110), wherein the sum of third ports is maximal N, and with at least one fourth port (120), each of the third and fourth ports being able to be set to a specific wavelength and is adapted for converting incoming optical payload signals of that specific wavelengths back into electrical payload signals;
- setting each third port (120) to respectively match a wavelength of one of the first port (210);
- monitoring the first ports (210) and the thirds ports (110) concerning their respective port-behavior during transmitting optical signals, each of which having specific wavelength respectively assigned to one of the first ports;
- in case of detecting a faulty first port (210), activating one of the at least one second ports (220) and setting the third port (110) which had matched the wavelength of the faulty port to match the wavelength of the activated second port;
- in case of detecting a faulty third port (110) of one of the second devices, switching at this second device from the faulty third port to one of the fourth ports (120) and setting this fourth port to match the wavelength formerly match by the faulty third port.

2. Method of providing failure protection based on a faulty port in an aggregation network, wherein the aggregation network incorporates an optical fiber structure with several peripheral nodes (100) aggregated thereto, each of which providing a handover point to a plurality of access networks (AN), and with the optical fiber (OF) structure terminated at a core node (200) providing a handover point to a core network (CN), and wherein the aggregation network is adapted for transmitting optical signals based on wavelength-division-multiplexing (WDM) within a number of N transmission channels, each of which being differentiated by a different wavelength, in parallel and independently from each other,
- the method comprising the steps of
- providing the core node (200) with a first optical network element including a number of N first ports (210) and at least one second port (220), each of the first and second ports has a fixed assignment to a specific and unique wavelength and is adapted for converting incoming optical payload signals of that specific wavelengths back into electrical payload signals;
- providing each of the peripheral nodes (100) with a second optical network element (105) and providing each of the second optical network elements with third ports (110), wherein the sum of third ports is maximal N, and with at least one fourth port (120), each of the third and fourth ports being able to be set to a specific wavelength and is adapted for converting incoming electrical payload signals into optical signals having that specific wavelength;
- setting each third port (120) to respectively match a wavelength of one of the first port (210);
- monitoring the first ports (210) and the thirds ports (110) concerning their respective port-behavior during transmitting optical signals, each of which having specific wavelength respectively assigned to one of the first ports;
- in case of detecting a faulty first port (210), activating one of the at least one second ports (220) and setting the third port (110) which had matched the wavelength of the faulty port to match the wavelength of the activated second port;
- in case of detecting a faulty third port (110) of one of the second devices, switching at this second device from the faulty third port to one of the fourth ports (120) and setting this fourth port to match the wavelength formerly match by the faulty third port.

3. Method according to claim 2, wherein
- each of the first and second ports is adapted for converting incoming electrical payload signals into optical signals having that specific wavelength but with the second ports being not activated therefore; and
- each of the third and fourth ports is adapted for converting incoming optical payload signals of that specific wavelengths back into electrical payload signals.

4. System of providing failure protection based on a faulty port in an aggregation network, wherein the system includes the aggregation network incorporating an optical fiber structure with several peripheral nodes (100) aggregated thereto, each of which providing a handover point to a plurality of access networks (AN), and with the optical fiber (OF) structure terminated at a core node (200) providing a handover point to a core network (CN), and wherein the aggregation network is adapted for transmitting optical signals based on wavelength-division-multiplexing (WDM) within a number of N transmission channels, each of which being differentiated by a different wavelength, in parallel and independently from each other,
- the system is **characterized by**
- a first optical network element (205) of the core node (200), wherein the first WDM-device includes a number of N first ports (210) and at least one second port (220), each of the first and second ports has a fixed assignment to a specific and unique wavelength and is adapted for converting incoming electrical payload signals into optical signals having that specific wavelength, but with the second ports being not activated therefore, and/or is adapted for converting incoming optical payload signals of that specific wavelengths back into electrical payload signals;
- a second optical network element (105) of each of the peripheral nodes (100), wherein each of the second optical network element includes third ports (110), wherein the sum of third ports is maximal N, and at least one fourth port (120), each of the third and fourth ports being able to be set to a specific wavelength and is adapted for converting incoming optical payload signals of that specific wavelengths back into electrical payload signals and/or is adapted for converting incoming electrical payload signals into optical signals having that specific wavelength;
- wherein each of the third ports (120) is set to respectively match a wavelength of one of the first port (210);
- a monitoring device (300) for monitoring the first ports (210) and the thirds ports (110) concerning their respective port-behavior during transmitting optical signals, each of which having specific wavelength respectively assigned to one of the first ports;
- and a failure protection device (400) adapted
- in case of detecting a faulty first port (210) by the monitoring device, for activation one of the at least one second ports (220) and for setting the third port (110) which had matched the wavelength of the faulty port to match the wavelength of the activated second port; and
- in case of detecting a faulty third port (110) of one of the second devices by the monitoring device, for switching at this second device from the faulty third port to one of the fourth ports (120) and for setting this fourth port to match the wavelength formerly match by the faulty third port.

5. System according to claim 4, wherein the first optical network element (205) is or at least incorporates at least one of a WDM-device, in particular including a multiplexer/demultiplexer device, and a coupler/splitter device.

6. System according to claim 4 or 5, wherein each of the second optical network elements (105) is or at least incorporates a coupler/splitter device.

7. System according to one of claims 4 to 6, wherein the optical fiber (OF) structure is constructed for enabling a bi-directional transmission of optical signals.

8. System according to one of claims 4 to 7, wherein the wherein the optical fiber (OF) structure is duplicated and the core node (200) is split into two partial core-nodes, with the duplicated optical fiber structure therebetween and terminated at each of the two partial core nodes, and
wherein each of the peripheral nodes (100) is aggregated on duplicated the optical fiber structure and reached from each of the partial core nodes.
